# EUROPEAN PATENT APPLICATION

(11) **EP 0 946 068 A2**
(43) Date of publication of application: **29.09.1999**
(21) Application number: 99105113.7
(22) Date of filing: 25.03.1999
(51) Int. Cl.: H04Q 7/20, H04L 12/28

(54) **Radio data communication method and system**

(30) Priority: 26.03.1998 JP 7871398
(71) Applicant: NEC CORPORATION, Tokyo (JP)
(72) Inventor: Kikuchi, Tsuneyuki, Minato-ku, Tokyo (JP)
(74) Representative: VOSSIUS & PARTNER

(57) **Abstract**

A radio data communication method in which a client machine logs in a wire communication network via a radio communication network, a public network and a line interface for transmitting/receiving data to/from a server machine in the wire network, comprising a step of inserting control data at the head of data to transmit/receive and suppressing the number of responses from a remote station, checking the reason of disconnection and reconnecting the communication line automatically when the line is disconnected due to deterioration of connection quality, re-establishing connection with said server machine, and restarting data transmission from the end of the transmitted data.

## Description

The present invention relates to a radio data communication method and system.

A radio communication system such as Personal Handy-phone System (PHS) and Personal Digital Cellular (PDC) has been provided.

In the prior radio communication system such as PHS and PDC, when the user moves from a current unit radio area (e.g., a cell) to another area, communication is momentary interrupted by a channel change request generated from a base station. In addition, in places like in a tunnel, behind a building or in an underground shopping center where a radio wave does not reach or difficult to reach, the intensity of a radio wave receiving field is suddenly attenuated and communication is interrupted or the line is disconnected in some cases.

Recently, radio communication has spread to various fields, for example, e-mail via a wire communication network and access to a World Wide Web (WWW) server. If an interruption occurs as above described, it is regarded as a transmission error in data communication, and normal data communication is obstructed. To deal with it, in a radio data communication protocol PHS Internet Access Forum Standard (PIAFS) in PHS, for example, the communication environment has been improved and if a transmission error occurs in a radio section and lasts for a maximum of 10 and a few seconds, it can be compensated.

However, even if the aforementioned radio data communication protocol PIAFS in PHS, for example, is used, the problem that when communication is interrupted, the is line disconnected for over 10 and a few seconds is still unsolved, and if the line is disconnected during data communication, the user has to re-connect the line with a remote station and send/receive data again to/from the beginning. This raises another problem that the process from connecting the line to sending/receiving data becomes very troublesome, as well as the communication charge becomes comparatively high.

In addition, though a transmission error is compensated in a radio data communication protocol during data communication, a transmission error is compensated also in a wire data communication protocol Transmission Control Protocol (TCP), for example, and the error is doubly compensated, raising other problems such as delaying the data communication speed and increasing the communication charge.

In view of the above problems, an object of the present invention is to provide a radio data communication method which eliminates the necessity of re-sending data from the beginning even if a line is disconnected during data communication.

To achieve the above mentioned object, the present invention provides a radio data communication method in which a client machine logs in a wire communication network via a radio communication network, a public network and a line interface for transmitting/receiving data to/from a server machine in the wire communication network, comprising the step of inserting control data at the head of data to transmit/receive and suppressing the number of responses from a remote station, checking the reason of disconnection and reconnecting the communication line automatically when the line is disconnected due to deterioration of connection quality, re-establishing connection with said server machine, and restarting data transmission from the end of the transmitted data. Furthermore, to achieve the above mentioned object, the present invention provides a radio data communication system in which a client machine logs in a wire communication network via a radio communication network, a public network and a line interface for transmitting/receiving data to/from a server machine in the wire network, comprising: a means for inserting control data at the head of data to transmit/receive and suppressing the number of responses from a remote station, a means for checking the reason of disconnection and reconnecting the communication line automatically when the line is disconnected due to deterioration of connection quality, a means for re-establishing connection with said server machine, and a means for restarting data transmission from the end of the transmitted data.

According to the present invention, data is compensated by a radio communication protocol such as PIAFS between a client machine and a line interface, and the line interface is located at a very short distance to the server machine, minimizing data transmission error caused by the collision of data in each section.

First, the radio data communication method and system of the present invention comprise a stop/means of/for inserting control data at the head of data to transmit/receive during data transmission and suppressing the number of responses from a remote station, thereby realizing high speed and efficient data transmission and reception.

Second, the radio data communication method and system of the present invention comprise a step/means of/for inserting control data at the head of data to transmit/receive and holding the transmitted data in Random Access Memory (RAM), so that the data is not lost and is re-sent even if a radio line is disconnected, thereby realizing high speed and efficient data transmission and reception.

Third, the radio data communication method and system of the present invention comprise a step/means of/for checking the reason of disconnection of a radio line, and reconnecting the line automatically when it is disconnected due to deterioration of connection quality, and re-establishing connection with said server machine, and restarting data transmission from the end of the transmitted data, thereby improving the user operability.

Forth, the radio data communication method and system of the present invention comprise a step/means of/for re-setting the size of data to transmit/receive according to changes in the received signal strength indicator during data transmission and the number of frames which can be continuously transmitted without waiting for the response from a remote station, thereby decreasing the sending data size when the radio line is disconnected and realizing high speed efficient data transmission and reception.

Fifth, the radio data communication method and system of the present invention comprise a step/means of/for re-setting the size of data to transmit/receive according the number of disconnection occurred during data transmission and the number of frames which can be continuously transmitted without waiting for the response from a remote station, thereby decreasing the sending data size when the radio line is disconnected and realizing high speed efficient data transmission and reception.

Sixth, the radio data communication method and system of the present invention comprise a step/means of/for re-setting the size of data to transmit/receive according to the number of re-sending data occurred in a radio communication protocol during data transmission and the number of frames which can be continuously transmitted without waiting for the response from a remote station, thereby decreasing the re-sending data size when the radio line is disconnected and realizing high speed and efficient data transmission and reception.

This and other objects, features and advantages of the present invention will become more apparent upon a reading of the following detailed description and drawings, in which:
Fig. 1 is a diagram showing a basic configuration of a first embodiment of the radio data communication method of the present invention;
Fig. 2 is a block diagram of the client machine shown in Fig. 1;
Fig. 3 is a block diagram of the server machine shown in Fig. 1;
Fig. 4 is a diagram showing the relationship between a model of protocol for communication with different models and a first embodiment of the data communication method, and a concept of a first embodiment of the data communication method;
Fig. 5 is a diagram showing examples of a control data format and profile data format;
Fig. 6 is a diagram showing an example of a control sequence for sending data from a client machine to a server machine;
Fig. 7 is a flowchart showing a process from connection of a radio line to data transmission/reception;
Fig. 8 is a flowchart showing a process of connecting a radio line in step S5;
Fig. 9 (a) - Fig. 9(d) are flowcharts showing a process of checking connection in step S18;
Fig. 10 is a diagram showing the relationship between the notified received signal strength indicator and a threshold value;
Fig. 11 is a flowchart showing a process when the line state monitor receives a dial-up start or stop request from the line control unit;
Fig. 12(a) - Fig.12(e) are flowcharts showing a process of checking connection in step S27;
Fig. 13(a) and Fig. 13(b) are flowcharts showing a process of establishing connection with the network protocol of the server machine in step S10;
Fig. 14(a) and Fig.14(b) are flowcharts showing a process of data communication with the server machine in step S12;
Fig. 15 is a flowchart showing a process of re-sending data when the radio line is disconnected during data transmission using a radio line;
Fig. 16(a) and Fig. 16(b) are flowcharts showing a process of re-sending data when a radio line is disconnected during data transmission using a radio line:
Fig. 17(a) and Fig. 17(b) are flowcharts showing a process of re-sending data when a radio line is disconnected during data transmission using a radio line;
Fig. 18(a) and Fig. 18(b) are flowcharts showing a process of changing a profile value by detecting a radio wave state on a radio line during data transmission using a radio line;
Fig. 19(a) and Fig. 19(b) are flowcharts showing a process of changing a profile value according to the number of line disconnection occurred within given time during data transmission using a radio line;
Fig. 20(a) and Fig. 20(b) are flowcharts showing a process of changing a profile value according to the number of data re-sending occurred in a radio communication protocol during data transmission using a radio line;
Fig. 21(a) and Fig. 21(b) are flowcharts showing a process of connecting/re-connecting a line in the configuration that the radio control unit can not notify the received signal strength indicator to the line state monitor, and instead, it notifies whether the client machine 1 is in a radio area (in/out zone information);
Fig. 22 is a table showing examples of control commands set in Command ID shown in Fig. 5;
Fig. 23 is a table showing an example of received signal strength indicator and profile data;
Fig. 24 is a table showing an example of disconnection number and profile data;
Fig. 25 is a table showing an example of number of re-sending and profile data.

The embodiments of the present invention are described hereinafter by referring to the attached drawings.

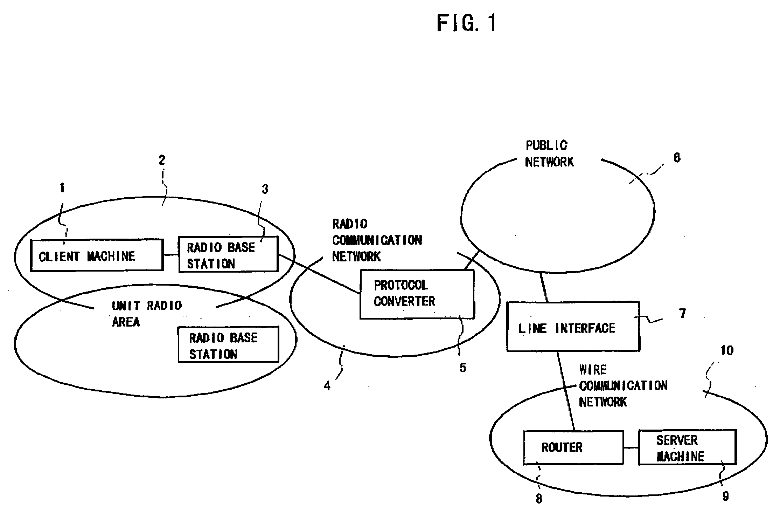

Fig. 1 shows the embodiment of the radio data communication method of the present invention.

In this example, a client machine 1 that is a portable radio terminal communicates data with a server machine 9. Namely, the client machine 1 transmits/receives data to/from the server machine 9 via a radio communication network 4, a public network 6 and a wire communication network 10.

The radio communication network 4 is a kind of communication network which connects the public network 6 via the radio base station 3 which establishes connection with the client machine 1 located in a unit radio area 2 by utilizing PDC or PHS, and a protocol converter 5 which converts the data transferred between the radio communication network 4 and public network 6 to meet the communication network.

The public network 6 is a kind of communication network such as a public switched telephone network (PSTN) or an integrated services digital network (ISDN), and it is connected to the wire communication network 10 via a line interface 7 such as a terminal adapter (TA) and a modem.

The wire communication network 10 is a kind of network that is connected to the server machine 9 via the router 8 by utilizing a Local Area Network (LAN), for example.

With the above configuration, data is compensated by a radio communication protocol such as PIAFS between the client machine 1 and the line interface 7, the line interface 7 is located at a very short distance to the server machine 9, and a data transfer error caused by the collision of data is reduced to very few in a section.

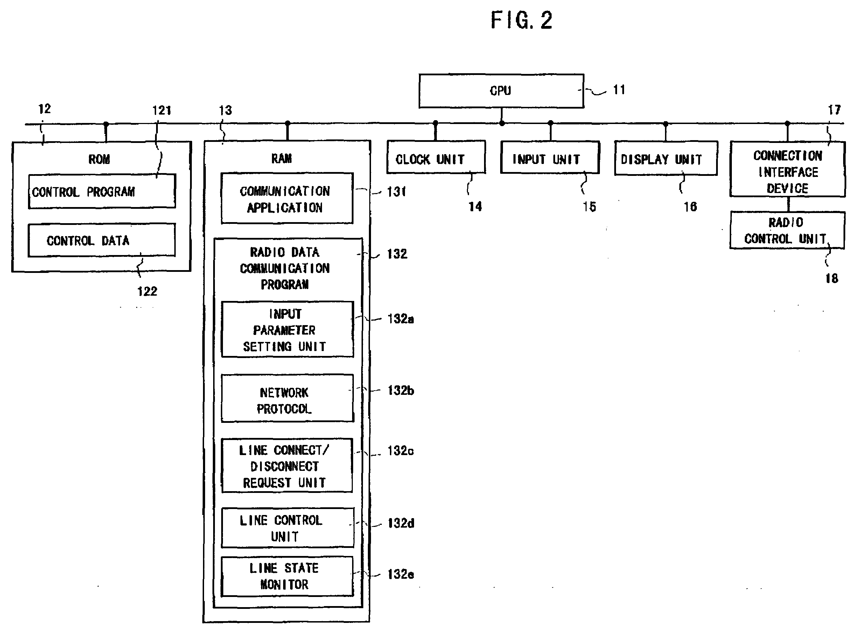

Fig. 2 is a block diagram of the client machine 1 shown in Fig. 1.

In Fig. 2, the client machine 1 comprises a Central Processing Unit (CPU) 11 for controlling operations as a whole system; a Read Only Memory (ROM) 12 for storing a control program 121 such as Base Input/Output System (BIOS) and control data 122; a RAM 13 which temporarily or permanently stores various information on the control by the CPU 11, a communication application 131 and a radio data communication program 132; a clock unit 14 for displaying a current time and measuring time; an input unit 15 to accept the input by the user from a keyboard or a pen; a display unit 16 such as a display and Liquid Crystal Display (LCD) for displaying the states and operation procedure of the client machine 1; a connection interface device 17 such as Recommended Standard 232C (RS-232C) for transferring control commands and data between a radio control unit 18 and a radio data communication program 132; and a radio control unit 18 for establishing connection with a radio base station or monitoring the current line state. All of these components are connected to a common data bus line and a control bus line.

The radio data communication program 132 is executed immediately when the client machine 1 is turned on. The radio data communication program 132 comprises an input parameter setting unit 132a which notifies the user set control parameter to a network protocol 132b, a line control unit 132d and a line state monitor 132a; a network protocol 132b which adds the network protocol data to the data received from the communication application 131 such as e-mail and file transfer application, transmits it to the connection interface device 17, cancels the network protocol data included in the data received from the connection interface device 17 and sends it to the communication application 131; a line connect/disconnect request unit 132c which receives the line connect/disconnect request from the user or the communication application 131 and requests the line control unit 132d to do so; a line control unit 132d which controls whether the line is busy and the line control information such as the number of disconnection times in any given time; and a line state monitor 132e which gets the current line state and the reason of disconnecting the line from the radio control unit 18.

The radio control unit 18 and line state monitor 132e becomes replaceable according to the radio communication network 4 shown in Fig. 1, and the radio control unit 18 is operated by the control command from the line state monitor 132e.

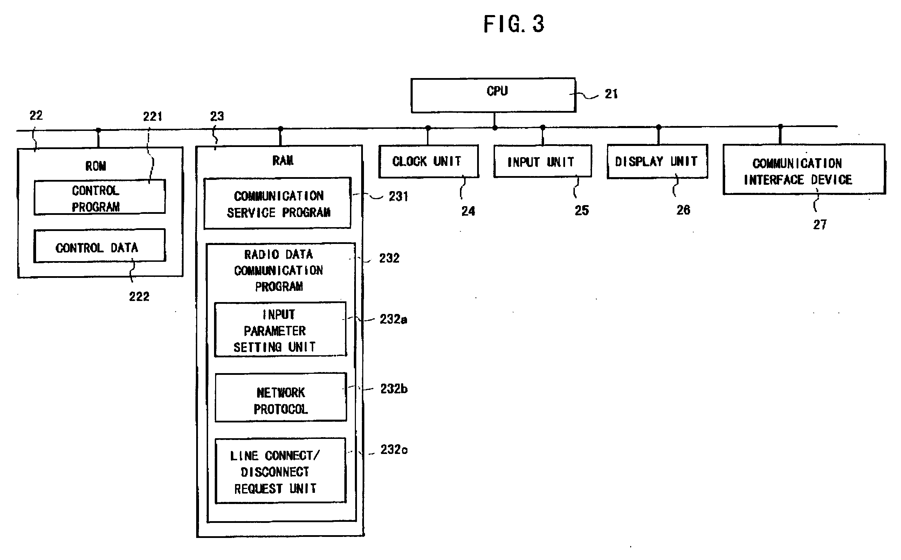

Fig. 3 is a block diagram of the server machine 9 shown in Fig. 1.

In Fig. 3, the server machine 9 comprises a CPU 21 for controlling the whole system operation; a ROM 22 containing a control program 221 and control data 222; a RAM 23 which temporarily or permanently stores various information on the control by the CPU 21 as well as a communication service program 231 and a radio data communication program 232; a clock unit 24 which displays current time and measures time; an input device 25 which accepts the keyboard or pen input by the user; a display unit 26 such as a display and LCD for displaying the states and operation procedure of the server machine 9 and a communication interface device 27 such as Ethernet defined in IEEE 802.4 for transferring control commands and data between the router 8 and the radio data communication program 232. All of these components are connected to a common data bus line and a control bus line.

The radio data communication program 232 is executed immediately when the server machine 9 is turned on. The radio data communication program 232 comprises an input parameter setting unit 232a which notifies the control parameter set by the supervisor to a network protocol 232b, a line connect/disconnect processor 232c; a network protocol 232b which adds the network protocol data to the data received from the communication service program 231, transmits it to the communication interface device 27, cancels the network protocol data included in the data received from the communication interface device 27 and sends it to the communication service program 231; and a line connect/disconnect request unit 232c which receives the line connect/disconnect request from the supervisor or the communication service program 231 and connects/disconnects the line.

Operation of this embodiment is described in details by referring to the attached drawings.

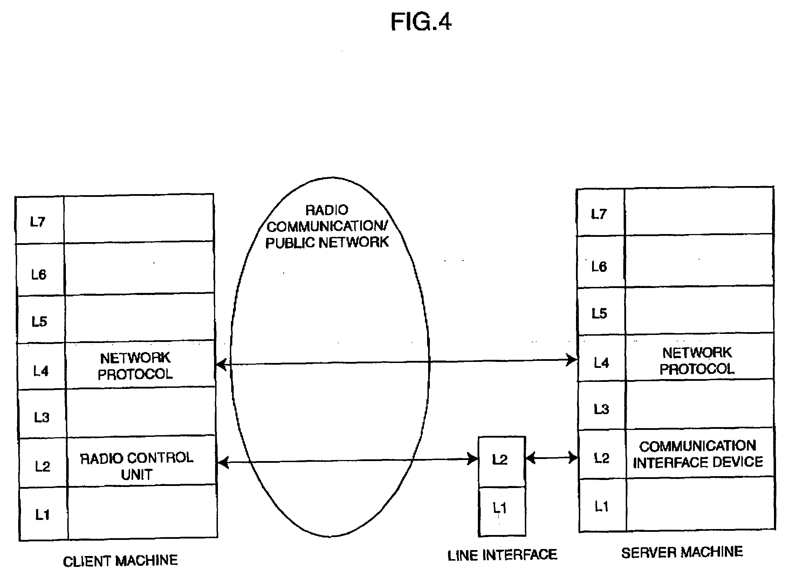

Fig. 4 shows the relationship between the protocol model for communication with different types of machine and the data communication method by this embodiment, and the concept of the data communication method of this embodiment.

In the radio data communication system of this embodiment, data is compensated by the radio communication protocol between the line interface 7 and the radio control unit 18 in the client machine 1. The line interface 7 is located at a very short distance to the communication interface device in the server machine 9 to minimize the number of data transfer errors caused by the collision of data, that is to say in terms of the model, data is regarded as being compensated at a level lower than a data link layer (L2).

Thus, in the transport layer (L4), a process of compensating data by time-out and re-sending by TCP defined in Request For Comments 793 (RFC 793), and a process of checking whether data changes during transmission are unnecessary, and instead, a process of sending/receiving data to/from the network layer (L3) by User Datagram Protocol (UDP) defined in RFC 768 is provided, and a mechanism suitable for radio data communication is provided.

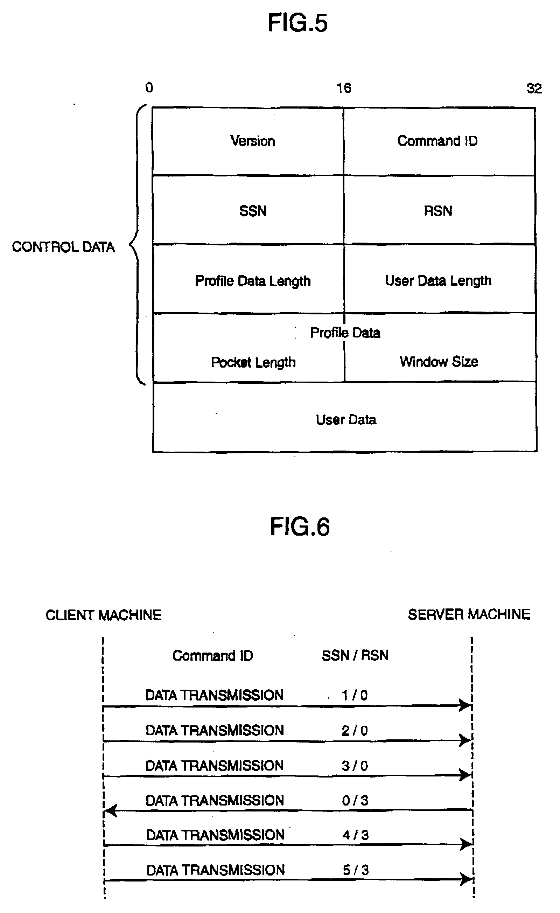

Fig. 5 shows examples of a control data format and a profile data format.

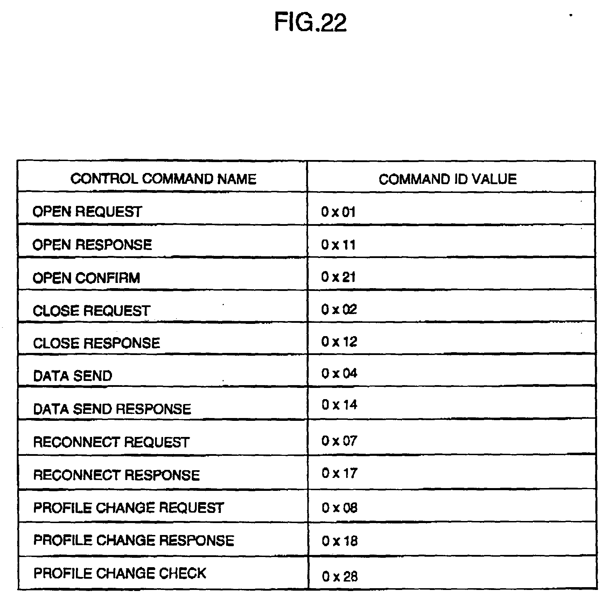

Fig. 22 is a table showing examples of control commands that are set in the command ID shown in Fig. 5.

As a mechanism suitable for radio data communication, control data as shown in Fig. 5 is inserted at the head of the data which is transferred between the network protocol 132b of the client machine 1 and the network protocol 232b of the server machine 9.

The head is set the version of control data format as a version in the format, likewise, the value of the command ID in Fig. 22 showing the type of a control command as a command ID, the sequence number of transmission data as SSN, the sequence number of the received data as RSN, the profile data length as ProfileDataLength, the user data length as UserDataLength, the maximum size dividing the transmission data as PacketLength, and the number of packets which can be continuously transmitted without waiting for the response from a remote station as WindowSize, respectively.

Fig. 6 shows an example of a control sequence for sending data from the client machine 1 to the server machine 9.

The client machine 1 of the transmission side sets the sequence number of data to send to SSN, and continuously transmits the control data + data divided into the size of PacketLength as a maximum to the server machine 9 by the WindowSize number. Receiving the WindowSize number of the data, the server machine 9 of the receiver side sets the sequence number of the data received by that time, sends back a response and transfers the data by repeating the above process.

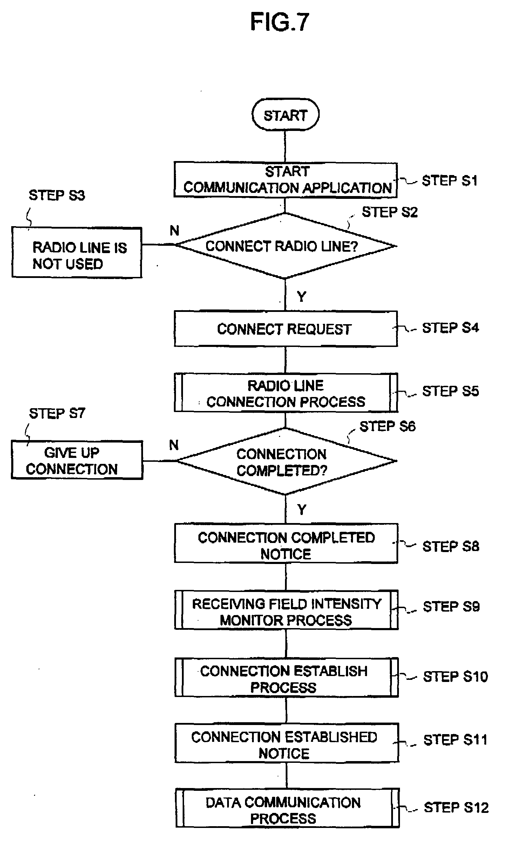

As to operation of this example using the above control data, first a process from connecting a radio line to sending data is explained using Fig. 7.

When the user operates the communication application 131 in RAM of the client machine 1 (step S1), the line connect/disconnect request unit 132c asks the user to determine whether the radio line is connected or not (steps S2), and goes to step S4 if the user answers Yes, and goes to step 3 if No.

In step S3, radio data communication that is not using the method of the present invention is performed. In step S4, the line connect/disconnect request unit 132c requests the line control unit 132d to connect the line. Receiving the line connect request, the line control unit 132d moves to the step of connecting a radio line (step S5), judges whether connection is completed (step S6), and goes to step S8 if Yes and step S7 if No.

In step S7, the line control unit 132d informs the line connect/disconnect reguest unit 132c that the radio line is in non-connectable state and urges to notify it to the user. In step 8, the line control unit 132d notifies the line connect/disconnect request unit 132c and network protocol 132b that the connection is completed, and moves to the step of monitoring the received signal strength indicator (step S9).

The network protocol 132b moves to the step of establishing connection with the network protocol 232b of the server machine 9 (step S10). After establishing connection, the network protocol 132b notifies it to the communication application 131 (step S11). The communication application 131 performs data communication with the server machine 9 via the network protocol 132b (step S12).

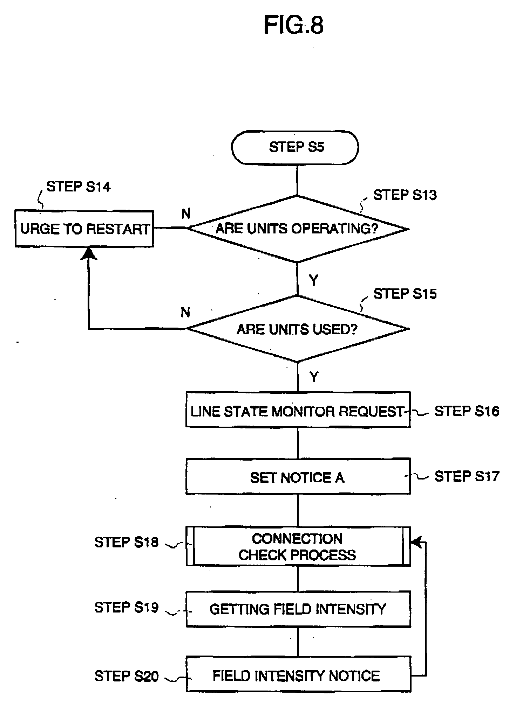

Step S5 for connecting a radio line is explained using Fig. 8.

The line control unit 132d check first that both of connection interface device 17 and radio control unit 18 are operating (step S13), and moves to step S15 if Yes, and step S14 if No.

In step S14, the line control unit 132d notifies it to the line connect/disconnect request unit 132c, and urges the user to re-start the communication application 131 after checking the operation. In step 15, the line control unit 132d checks whether the connection interface device 17 or radio control unit 18 is used, and moves to step S16 if Yes, and step S14 if No.

In step S16, the line control unit 132d requests the line state monitor 132e to monitor the line state, and sets the clock unit 14 to notify A after the time required to judge whether the line is connectable or not (step S17), and then moves to the step of judging whether to connect the line (step S18).

Receiving the request to monitor the line state, the line state monitor 132e gets a value to judge the state of radio line (hereinafter called "the received signal strength indicator") from the radio control unit 18 at every monitoring cycle through the connection interface device 17 (step S19), and notifies it to the line control unit 132d (step S20).

The monitoring cycle and the time required to judge whether the line is connectable are one of the control parameters set by the user, and are notified from the input parameter setting unit 132a.

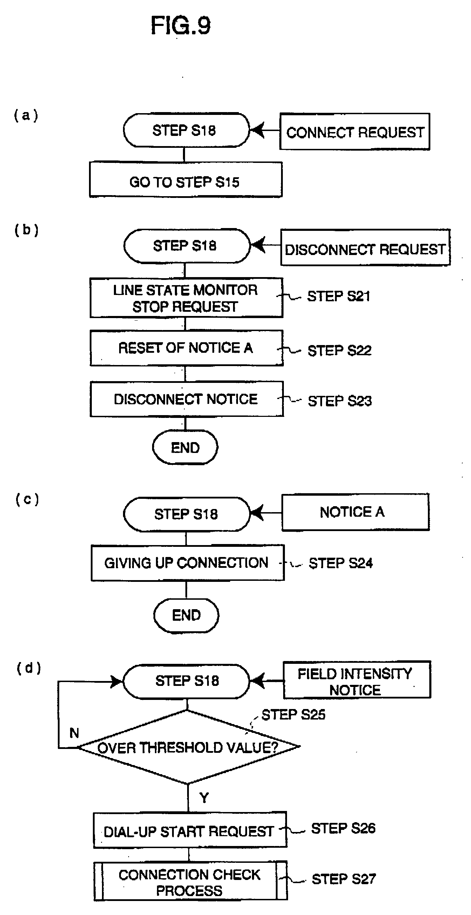

Step S18 for judging whether to connect the line is explained using Fig. 9.

The line control unit 132d is in standby mode and accepts a request from the line connect/disconnect request unit 132c, a notice from the clock unit 14 and a notice from the line state monitor 132e.

In Fig. 9(a), the line control unit 132d moves to step S15 after receiving a line connect request from the line connect/disconnect request unit 132c.

In Fig. 9(b), after receiving a line connect request, the line control unit 132d requests the line state monitor 132e to stop monitoring the line state (step S21), sets the clock unit 14 to reset the notice A (step S22) and notifies the disconnection to the line connect/disconnect request unit 132c (step S23).

In Fig. 9 (c), when receiving the notice A from the clock unit 14, the line control unit informs the line connect/disconnect request unit 132c that the radio line is not in the connectable state, and urges to notify it to the user (step S24).

In Fig. 9 (d), when receiving the received signal strength indicator notice from the line state monitor 132e, the line control unit check to see if the received signal strength indicator exceeds the threshold value for connection (step S25). In step S25, the line control unit 132d sends the request to start dial-up to the line state monitor 132e, and moves to the step of checking connection (step S27)

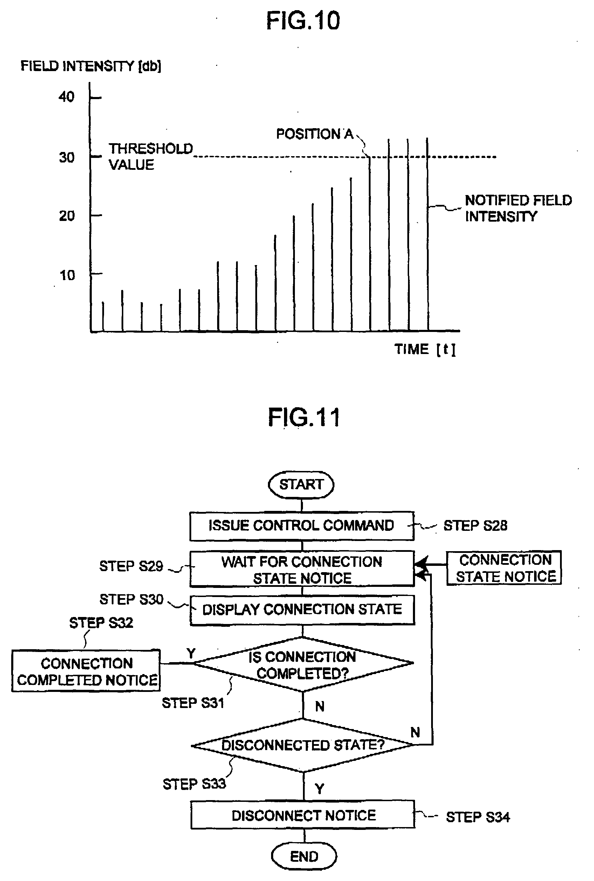

The threshold value for connection is one of the control parameters set by the user and is notified from the input parameter setting unit 132a. As an example, Fig. 10 shows the relationship between the notified received signal strength indicator and the threshold value.

At the position A in Fig. 10, the line control unit 132d sends a dial-up start request to the line state monitor 132e, and moves to the step of checking connection.

Operation of the line state monitor 132e when receiving the dial-up start or stop request from the line control unit 132s is explained using Fig. 11.

The line state monitor 132e issues a control command to start or stop dial-up to the radio control unit 18 via the connection interface device 17 (step S28), and goes into the state waiting for a connection state notice from the radio control unit 18 (step S29). Receiving the connection state notice, the line state monitor 132e presents the connection state to the user (step S30), checks by the notice to see if the connection is completed (step S31), and moves to step S32 if Yes, and stop S33 if No.

In step S32, the line state monitor 132e notifies the line control unit 132d that the connection is completed. In step S33, the line state monitor checks to see if the line is disconnected or not, and moves to step S34 if Yes, and step S29 if No. In step S34, the line state monitor notifies the line control unit 132d that the line is disconnected. The disconnection notice is given with a reason.

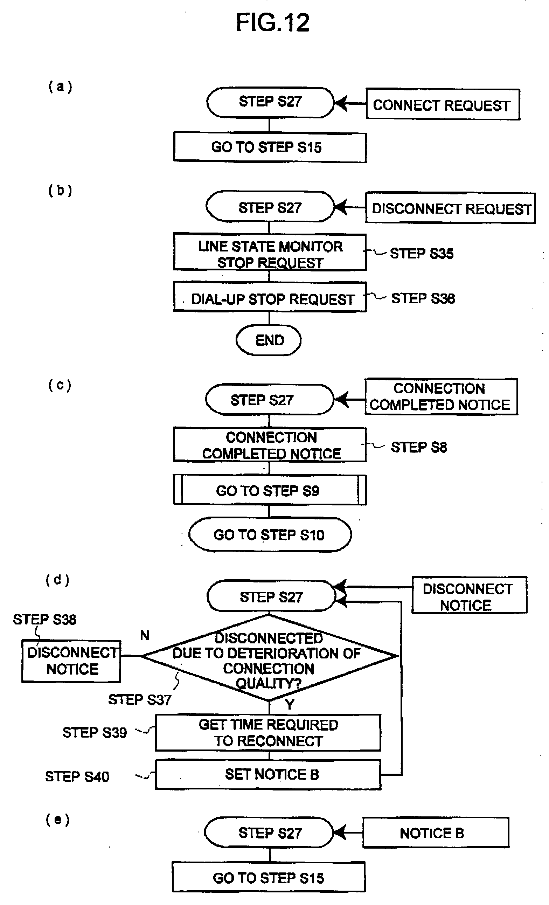

Operation of step S27 for checking connection is explained using Fig. 12.

The line control unit 132d is in standby mode and accepts a request from the line connect/disconnect request unit 132c, a notice from the line state monitor 132e and a notice B from the clock unit 14.

In Fig. 12(a), the line control unit 132d moves to step S15 after receiving a line connect request from the line connect/disconnect request unit 132c.

In Fig. 12(b), after receiving a line disconnect request, the line control unit 132d requests the line state monitor 132e to stop monitoring the line state (step S35) and to stop dial-up (step S36).

In Fig. 12(c), when receiving the connection completed notice from the line state monitor 132e, the line control unit notifies establishment of connection to the line connect/disconnect request unit 132c and the network protocol 132b (step S8), and moves to the step of monitoring the received signal strength indicator (step S9). Then, the network protocol 132b moves to the step of establishing connection with the network protocol 232b of the server machine 9.

In Fig. 12(d), when receiving the disconnection notice, the line control unit checks by the attached reason to see if the line is disconnected due to deterioration of connection quality (step S37, and moves to step S39 if Yes, and step S38 if No. In step S38, the line control unit notifies the disconnection to the line connect/disconnect request unit 132c. In step 39, the line control gets time required to re-connect the line, sets the clock unit 14 to notify B after that time (step S40) and moves to step 27.

In Fig. 12(e), when receiving the notice B from the clock unit, the line control unit moves to step S15. By the above operation, even if the line is disconnected due to deterioration of connection quality, the line can be re-connected and the data transmission can be continued.

The time required to re-connect the line is one of the control parameters set by the user and is notified from the input parameter setting unit 132a.

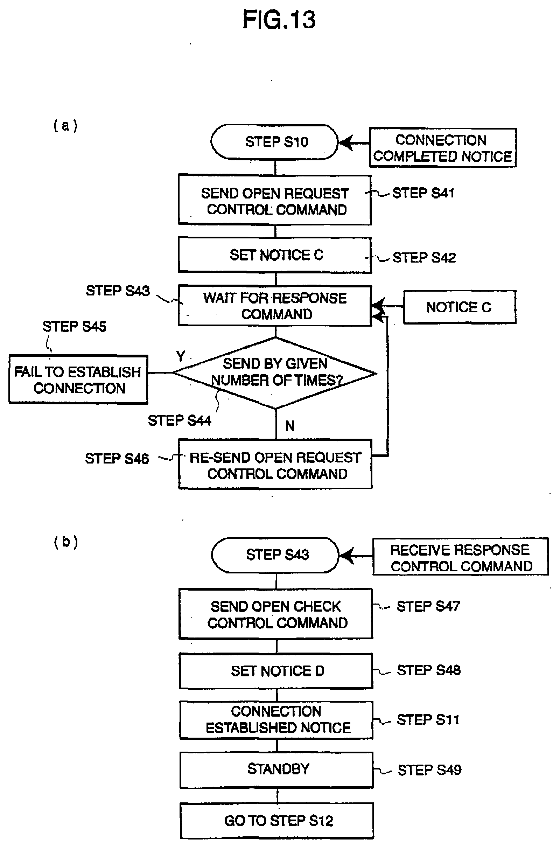

Step S9 for monitoring the received signal strength indicator will be explained later. Step 10 for establishing connection with the network protocol 232b of the server machine 9 is explained below using Fig. 13.

In Fig. 13(a), after receiving the connection completed notice from the line control unit 132d, the network protocol 132b sets a packet length and a window size, sends an open request control command to the network protocol 232b of the server machine 9 via the connection interface device 17 (step S41), sets the clock unit 14 to notify C after given time (step S42), and waits for reception of an open response control command from the server machine 9 (step S43).

In the above state of waiting for the reception, when receiving the notice C the clock unit 14 before receiving the open response control command, the network protocol 132b checks to see if re-sending is performed by given times (step S44), and moves to step S45 if Yes, and step S46 if No.

In step S45, the network protocol notifies the line connect/disconnect request unit 132c that connection could not be made with the network protocol, and urges to notify it to the user. Then, the line connect/disconnect request unit sends a disconnect request to the line control unit, and disconnects the radio line.

In step S46, the network protocol sends again the open request control command to the network protocol 132b of the server machine 9, and moves to step S43.

In Fig. 13(b), when receiving the open response control command from the server machine 9, the network protocol sends an open check control command (step S47), sets the clock unit 14 to notify D after given time (step S48), notifies the communication application 131 that the connection is established (step S11), and waits until the communication application 131 sends data or the clock unit 14 sends the notice D (step S49). Then, the communication application 131 performs data transfer with the communication service program 231 of the server machine 9 via the network protocol 132b (step 12).

The given time and the number of times used in this example are one of the control parameters set by the user, and are notified from the input parameter setting unit 132a.

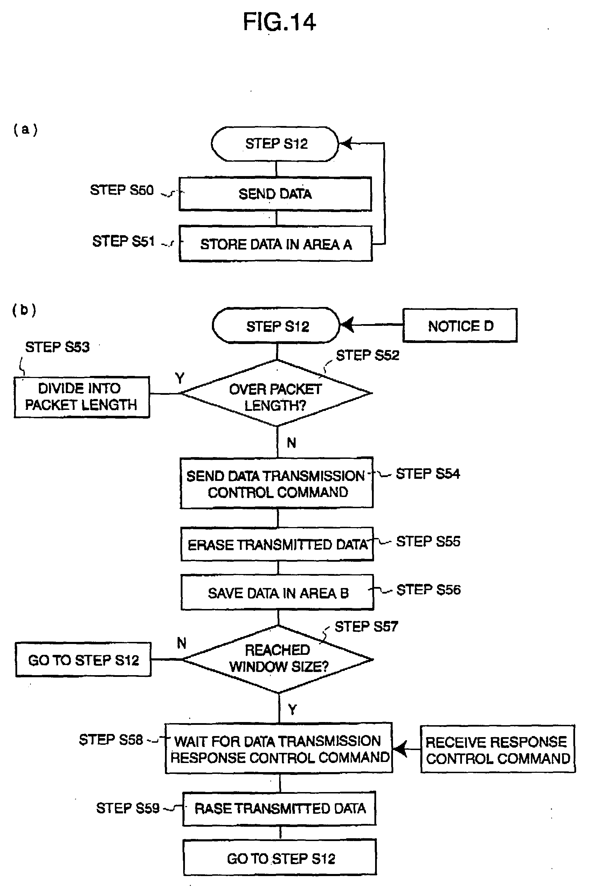

Step S12 for data communication with the server machine 9 is explained using Fig. 14.

In Fig. 14(a), the communication application 131 sends data to the network protocol 132b at any time (step S50). The network protocol 132b stores data in the area A of RAM13 (step S51), and moves to step S12

In Fig. 14(b), when receiving the notice D from the clock unit 14, the network protocol checks the size of the data stored in the area A to see if it is larger than the packet length negotiated with the server machine 9 during the connection establishing process (step S52), and moves to step S53 if Yes, and step S54 if No.

In step S53, the network protocol 132b cuts the data into the negotiated packet lengths, and moves to step S54. In step S54, the network protocol sets SSN, sends a data transmission control command to the network protocol 232b of the server machine 9 via the connection interface device, clears the sent data from the area A (step S55), saves the data in the area B in RAM 13 (step S56), and checks the number of continuously sent data frames to see if it reaches the window size negotiated with the server machine 9 during the connection establishing process (step S57), and moves to step S58 if Yes, and step S12 if No.

In step S58, the network protocol 132b waits for the data transmission response control command from the server machine 9, and after receiving the command, the network protocol clears the set data up to RSN from the area B (step S59), and moves to step S12. The above processing sequence is continued till reaching the and of the data sent from the communication application 131.

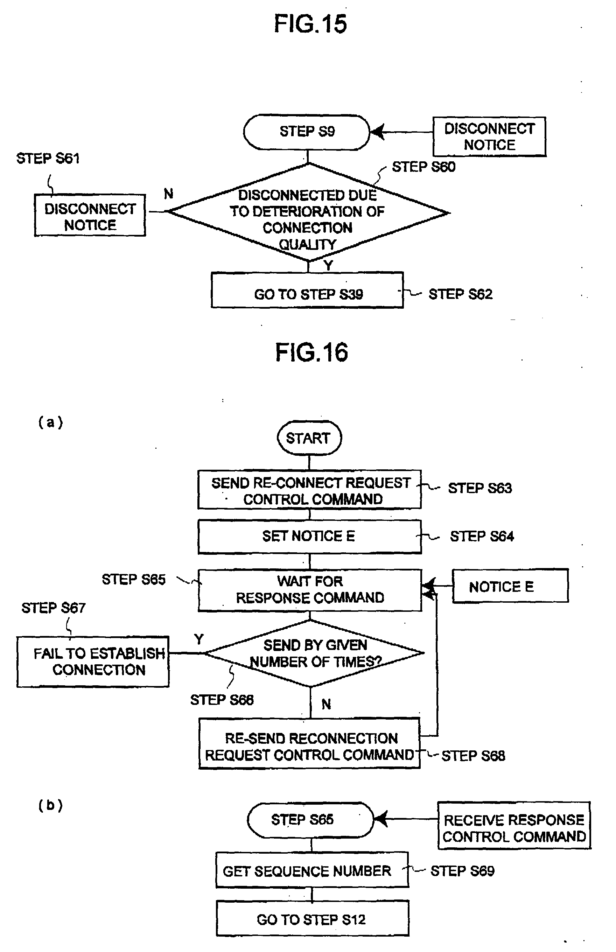

Second, a process of re-sending data when a radio line is disconnected during data transmission using a radio line is explained using Fig. 15, Fig. 16 and Fig. 17.

In Fig. 15, when receiving a disconnection notice from the line state monitor 132a during monitoring the received signal strength indicator (step S9), the line control unit 132d checks by the attached reason to see if the line is disconnected due to deterioration of the connection quality (step S60), and moves to step S62 if Yes, and step S61 if No.

In step 61, the line control unit 132d notifies disconnection to the line connect/disconnect request unit 132c and the network protocol 132b In step S62, the line control unit moves from step S39 to a re-connection process.

When the radio line is re-connected, the network protocol 132b re-establishes connection with the network protocol 232b of the server machine 9.

Fig. 16(a) is a flowchart showing a process of sending data from the client machine 1 to the server machine 9.

In Fig. 16(a), the network protocol 132b sends a re-connection request control command to the network protocol 232b of the server machine 9 via the connection interface device 17 (step S63), sets the clock unit 14 to notify E after any given time (step S64), and waits for a re-connection response control command from the server machine 9 (step S65).

In the above waiting state, when receiving the notice D from the clock unit 14 before a re-connect response control command, the network protocol 132b checks to see if re-sending is repeated by a given number of times (step S66), and moves to step S67 if Yes, and step S68 if No.

In step S67, the network protocol 132b notifies the line connect/disconnect request unit 132c that connection could not be re-established between the network protocols 132b and 232b, and urges to inform the user of it. Then, the line connect/disconnect request unit 132c sends a disconnect request to the line control unit 132d, and disconnects the radio line. In step S68, the line connect/disconnect request unit sends a re-connect request control command to the network protocol 232b of the server machine 9, and moves to step S65.

In Fig. 16(b), when receiving a re-connect response control command from the server machine 9, the network protocol 232b of the server machine 9 gets the sequence number of the data received up to that time from the RSN that is set in the control data (step S69). Then, the network protocol moves from the data of the next sequence number to a data transmission process (step S12).

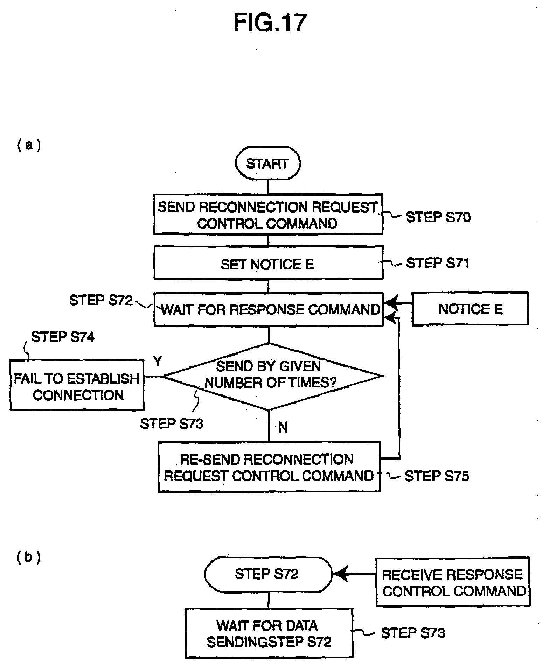

Fig. 17 is a flowchart showing a process of sending data from the server machine 9 to the client machine 1.

In Fig. 17(a), the network protocol 132b sends a re-connect request control command containing RSN to the network protocol 232b of the server machine 9 (step S70), sets the clock unit to notify E after any given time (step S71), and waits for a re-connect response control command from the server machine 9 (step S72).

In the above waiting state, when receiving a notice E from the clock unit 14 before a re-connect response control command, the network protocol 132b checks to see if re-sending is repeated by a given number of times (step S73), and moves to step S74 if Yes, and step S75 if No.

In step S74, the network protocol 132b notifies the line connect/disconnect request unit 132c that connection could not be re-established between the network protocols 132b and 232b, and urges to inform the user of if. Then, the line connect/disconnect request unit 132c sends a disconnect request to the line control unit 132d, and disconnects the radio line. In step S75, the network protocol 132b sends a re-connect request control command to the network protocol 232b of the server machine 9, and moves to step S72.

In Fig. 17(b), when receiving a re-connection response control command from the server machine 9, the network protocol 132b waits for the data sent from the server machine 9 (step S73).

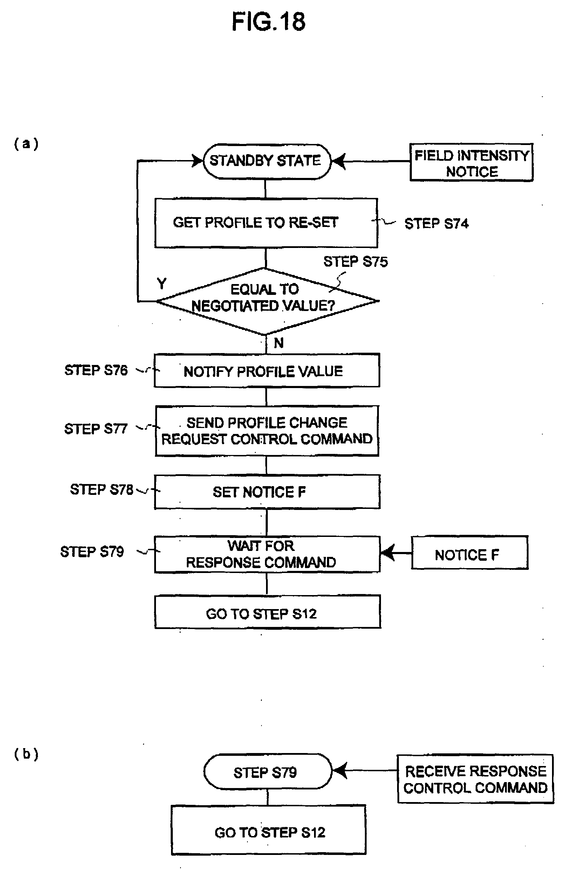

Third, a process of detecting the state of radio wave and changing a profile value during data transmission using a radio line is explained using Fig. 18.

In Fig. 18(a), the line control unit 132d is in the standby state after notifying establishment of connection to the line connect/disconnect request unit 132c and the network protocol 132d (step S8).

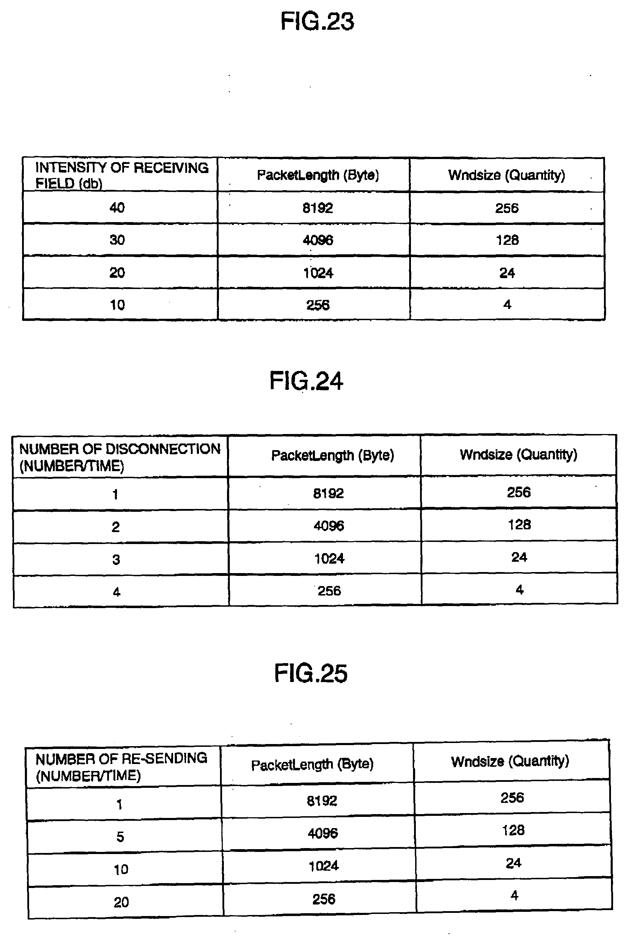

In the above standby state, when receiving a received signal strength indicator notice from the line state monitor 132e, the line control unit 132c gets profile data to re-set from the table showing the received signal strength indicator and profile data prepared previously (step S74). Fig. 23 shows an example of the table showing the received signal strength indicator and profile data.

The line control unit check to see if the obtained profile data is equal to the profile value negotiated with the server machine 9 during the connection establishing process (step S75). The line control unit goes into the standby state if Yes, and moves to step S76 if No.

In step S76, the circuit control unit notifies the profile value to re-set to the network protocol 132b. Receiving this notice, the network protocol 132b sends a profile change request control command to the network protocol 232b of the server machine 9 via the connection interface 17 (step S77), sets the clock unit 14 to notify F after any given time (step S78), and waits for a profile change response control command from the server machine 9 (step S79).

In the above waiting state, when receiving a notice F from the clock unit 14 before a profile change response control command, the network protocol 132b gives up changing the profile and continues data communication based on the set value (step S12).

In Fig. 18(b), when receiving a profile change response command from the server machine 9, the network protocol line continues data communication using a newly negotiated value (step S12).

A second embodiment of the present invention is described hereinafter.

Since the basic configuration of the communication system of this example is similar to that of the first example, it is explained by referring to Fig. 1, Fig. 2 and Fig. 3.

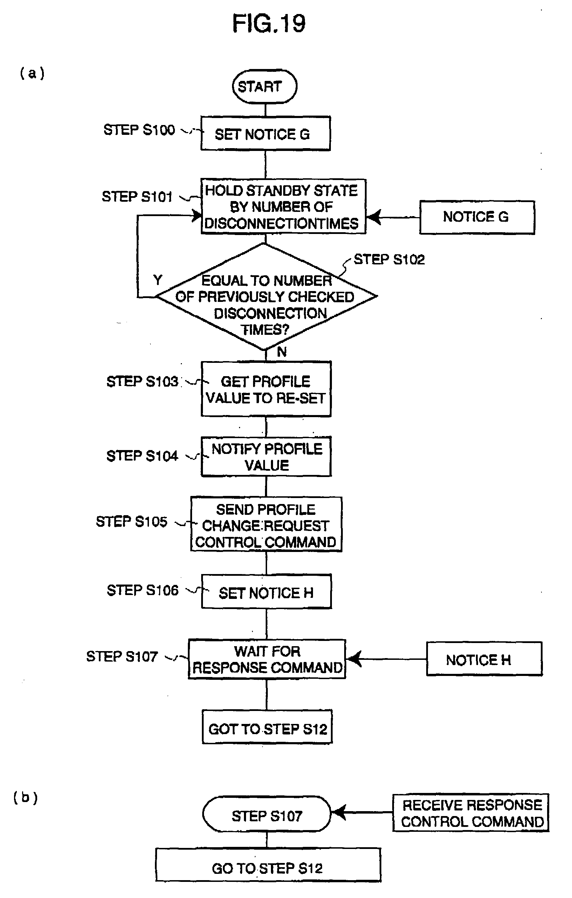

As a second example, a process of changing a profile value according to the number of times that the radio line is disconnected within given time (hereinafter called "the number of disconnection") during data transmission using a radio line is explained using Fig. 19.

In Fig. 19(a), after notifying establishment of connection to the line connect/disconnect request unit 132c and the network protocol 132b (step S8), the line control unit 132d sets the clock unit 14 to notify G after any given time (step S100), and goes into the standby state.

In the above standby state, when receiving the disconnection notice the line state monitor 132e, the line control unit holds the number of notification times (step S101). In the above standby state, when receiving the notice G from the clock unit 14, the line control unit, checks to see if the number of disconnection times notified in the previous standby state is equal to the number of disconnection times notified in the present standby state (step S102), and moves to step S101 if Yes, and step S103 if No.

In step S103, the line control unit gets the profile data to re-set from the table showing the number of disconnection and profile data prepared previously. Fig. 24 shows an example of the table showing the number of disconnection and profile data.

In step S104, the control line notifies the obtained profile value to the network protocol 132b. Receiving said notice, the network protocol 132b sends a profile change request control command to the network protocol 232b of the server machine 9 via the connection interface 17 (step S105), sets the clock unit 14 to notify H after any given time (step S106), and waits for a profile change response control command from the server machine 9 (step S107).

In the above waiting state, when receiving a notice H from the clock unit 14 before a profile change response control command, the network protocol 132b gives up changing the profile and continues data communication based on the set value (step S12).

In Fig. 19(b), when receiving the profile change response command from the server machine 9, the network protocol continues data communication using a newly negotiated value (step S12).

A third embodiment of the present invention is described hereinafter.

Since the basic configuration of the communication system of this embodiment is similar to that of the first example, it is explained by referring to Fig. 1, Fig. 2 and Fig. 3.

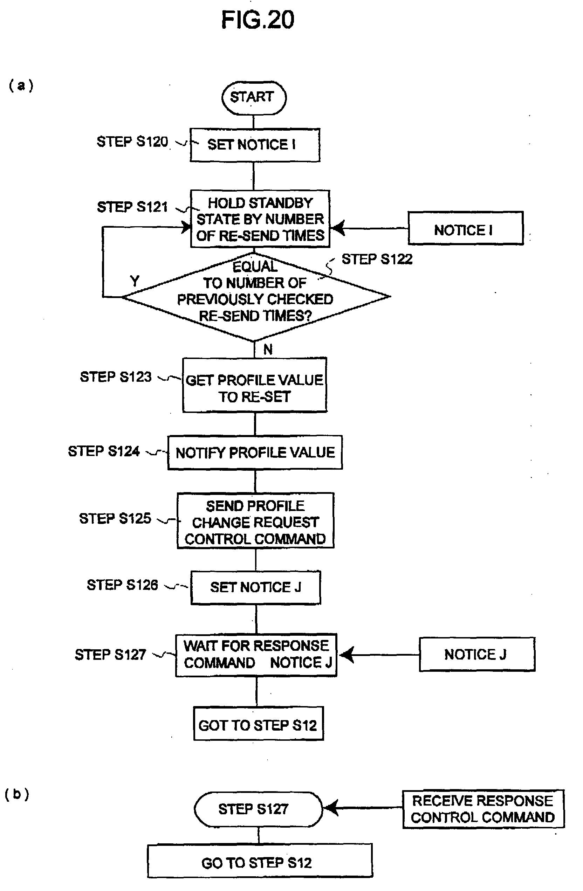

As a third example, a process of changing a profile value according to the number of re-send times occurred in the radio communication protocol during data transmission using a radio line is explained using Fig. 20.

In this example, each time re-send of data occurs in the radio communication protocol, the radio control unit 18 notifies it to the line control unit 132d via the line state monitor 132e.

In Fig. 20(a), after notifying establishment of connection to the line connect/disconnect request unit 132c and the network protocol 132b (step S8), the line control unit 132d sets the clock unit 14 to notify I after any given time (step S120), and goes into the standby state.

In the above standby state, when receiving the re-send notice from the line state monitor 132e, the line control unit holds the number of notification times (step S121). In the above standby state, when receiving the notice I from the clock unit 14, the line control unit checks to see if the number of re-send times notified in the previous standby state is equal to the number of re-send times notified in the present standby state (stop S102), and moves to step S121 if Yes, and step S123 if No.

In step S123, the line control unit gets the profile data to re-set from the table showing the re-send times and profile data prepared previously. Fig. 25 shows an example of the table showing the re-send times and profile data.

In step S124, the control line notifies the obtained profile value to the network protocol 132b. Receiving said notice, the network protocol 132b sends a profile change request control command to the network protocol 232b of the server machine 9 via the connection interface 17 (step S125), sets the clock unit 14 to notify J after any given time (step S126), and waits for a profile change response control command from the server machine 9 (step S127).

In the above waiting state, when receiving a notice J from the clock unit 14 before a profile change response control command, the line control unit gives up changing the profile and continues data communication based on the set value (step S12).

In Fig. 20(b), when receiving the profile change response command from the server machine 9, the line control unit continues data communication using a newly negotiated value (step S12).

A fourth embodiment of the present invention is described hereinafter.

Since the basic configuration of the communication system of this example is similar to that of the first example, it is explained by referring to Fig. 1, Fig. 2 and Fig. 3.

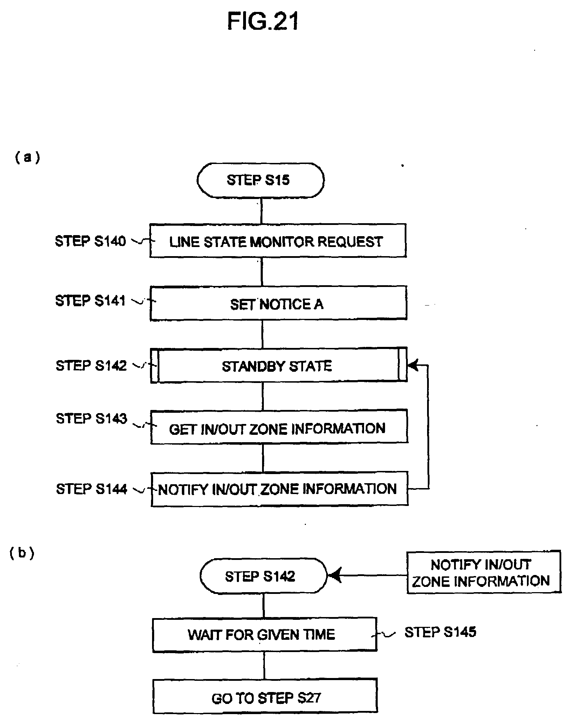

In a fourth example, the radio control unit 18 can not notify the received signal strength indicator to the line state monitor 132e, and instead, it notifies whether the client machine 1 is in the radio zone (in/out zone information). A process of connecting/re-connecting the line is explained using Fig. 21.

In Fig. 21(a), when receiving a connection request from the line connect/disconnect request unit 132c or when the line is re-connected after once disconnected due to deterioration of connection quality (step S15), the line control unit 132d requests the line state monitor 132e to monitor the line state (step S140), sets the clock unit 14 to notify A after the time required to judge whether it is connectable or not (step S141), and goes into the standby state (step S142).

Receiving the line state monitor request, the line state monitor 132a gets the in/out zone information from the radio control unit 18 via the connection interface device 17 (step S143), and when the client machine 1 goes into the radio zone, notifies it to the line control unit 132d (step S144).

In Fig. 21(b), the line control unit 132d is in the standby state, and accepts the request from the line connect/disconnect request unit 132c, the notice from the clock unit 14 and the notice from the line state monitor 132e. When receiving the connection request from the line connect/disconnect request unit 132c, the line control unit moves to step S21. When receiving the notice A from the clock unit 14, the line control unit moves to step S24. When receiving the in-zone notice the line state monitor 132e, the line control unit waits for any given time (step S145) and moves to step S27.

The present invention, being constituted as described above, has the following effects.
(1) A process of compensating data by time-out and re-send during data transmission/reception, and a process of checking whether data changes during transmission are unnecessary, and high speed and efficient data transmission/reception can be realized by suppressing the number of responses from a remote station.
(2) A process of holding the received data in RAM until receiving a response from a remote station is provided to permit to re-send data without losing it even if a radio line is disconnected.
(3) A process of checking the reason of disconnection and reconnecting the radio line automatically when the line is disconnected due to deterioration of connection, a process of re-establishing connection with a server machine, and a process of restarting data transmission from the end of the transmitted data are provided, improving the user operability and realizing efficient data transmission/reception.
(4) A process of re-setting the size of data to transmit/receive according to changes in the received signal strength indicator during data transmission/reception and the number of frames which can be continuously transmitted without waiting for the response from a remote station is provided, thereby decreasing the re-sending data volume when the line is disconnected and realizing high speed and efficient data transmission/reception.
(5) A process of re-setting the size of data to transmit/receive according to the number of disconnection occurred during data transmission and the number of frames which can be continuously transmitted without waiting for the response from the remote station is provided, thereby decreasing the re-sending data when the line is disconnected and realizing high speed and efficient data transmission/reception.
(6) A process of re-setting the size of data to transmit/receive according to the number of re-sending data occurred in a radio communication protocol during data transmission and the number of frames which can be continuously transmitted without waiting for the response from the remote station is provided, thereby decreasing the re-sending data volume when the line is disconnected and realizing high speed and efficient data transmission/reception.

## Claims

1. A radio data communication method in which a client machine logs in a wire communication network via a radio communication network, a public network and a line interface for transmitting/receiving data to/from a server machine in the wire network, comprising the steps of :
inserting control data at the head of data to transmit/receive and suppressing the number of responses from a remote station,
checking the reason of disconnection and reconnecting the communication line automatically when the line is disconnected due to deterioration of connection quality,
re-establishing connection with said server machine, and
restarting data transmission from the end of the transmitted data.

2. The radio communication method of claim 1, comprising a step of re-setting the size of data to transmit/receive according to changes in the received signal strength indicator during data transmission and the number of frames which can be continuously transmitted without waiting for the response from a remote station.

3. The method of claim 1 or 2, comprising a step of re-setting the size of data to transmit/receive according to the number of disconnection occurred during data transmission and the number of frames which can be continuously transmitted without waiting for the response from a remote station.

4. The method of claim 1, 2 or 3, comprising a step of re-setting the size of data to transmit/receive according to the number of re-sending data occurred in a radio communication protocol during data transmission and the number of frames which can be continuously transmitted without waiting for the response from a remote station.

5. The method of claim 1, 2, 3 or 4, comprising a step of monitoring the received signal strength indicator and re-establishing connection with said server machine if the received signal strength indicator exceeds the threshold value.

6. The method of claim 1, 2, 3, 4 or 5, comprising a step of monitoring the in/out area information and re-establishing connection with said server machine if the received the in/out area information that the client machine is in the radio area.

7. A radio data communication system in which a client machine logs in a wire communication network via a radio communication network, a public network and a line interface for transmitting/receiving data to/from a server machine in the wire network, comprising:
a means for inserting control data at the head of data to transmit/receive and suppressing the number of responses from a remote station,
a means for checking the reason of disconnection and reconnecting the communication line automatically when the line is disconnected due to deterioration of connection quality, a means for re-establishing connection with said server machine, and
a means for restarting data transmission from the end of the transmitted data.

8. The radio communication system of claim 7, comprising a means of re-setting the size of data to transmit/receive according to changes in the received signal strength indicator during data transmission and the number of frames which can be continuously transmitted without waiting for the response from a remote station.

9. The system of claim 7 or 8, comprising a means for re-setting the size of data to transmit/receive according to the number of disconnection occurred during data transmission and the number of frames which can be continuously transmitted without waiting for the response from a remote station.

10. The system of claim 7, 8 or 9, comprising a means for re-setting the size of data to transmit/receive according to the number of re-sending data occurred in a radio communication protocol during data transmission and the number of frames which can be continuously transmitted without waiting for the response from a remote station.

11. The system of claim 7, 8, 9 or 10, comprising a means for monitoring the received signal strength indicator and re-establishing connection with said server machine if the received signal strength indicator exceeds the threshold value.

12. The system of claim 7, 8, 9, 10 or 11, comprising a means for monitoring the in/out area information and re-establishing connection with said server machine if the received the in/out area information that the client machine is in the radio area.
